# EUROPÄISCHE PATENTSCHRIFT

(11) **EP 2 257 716 B1**
(45) Veröffentlichungstag und Bekanntmachung des Hinweises auf die Patenterteilung: **19.06.2013**
(21) Anmeldenummer: 09723199.7
(22) Anmeldetag: 18.03.2009
(51) Int. Cl.: F16C 11/06, F16J 3/04

(54) **DICHTUNGSBAUGRUPPE EINES KUGELGELENKS SOWIE KUGELGELENK**
SEALING SUBASSEMBLY OF A BALL JOINT, AND BALL JOINT
MODULE D'ÉTANCHÉITÉ D'UN JOINT SPHÉRIQUE ET JOINT SPHÉRIQUE

(30) Priorität: 18.03.2008 DE 102008014695
(43) Veröffentlichungstag der Anmeldung: 08.12.2010
(73) Patentinhaber: TRW Automotive GmbH, 73553 Alfdorf (DE)
(72) Erfinder: BERNHARD, Peter, 42349 Wuppertal (DE); MAIER, Andreas, 42719 Solingen (DE); METTE, Ulrich, 45289 Essen (DE); ERDOGAN, Cengiz, 47608 Geldern (DE)
(74) Vertreter: Prinz & Partner
(86) Internationale Anmeldenummer: PCT/EP2009/001998
(87) Internationale Veröffentlichungsnummer: WO 2009/115309

(56) Entgegenhaltungen:
- DE-B- 1 266 074
- FR-A- 2 754 024
- US-A1- 2003 118 395

## Beschreibung

Die Erfindung betrifft eine Dichtungsbaugruppe gemäß dem Oberbegriff der Ansprüche 1 oder 3, sowie ein Kugelgelenk mit einer solchen Dichtungsbaugruppe.

Kugelgelenke für Kraftfahrzeuge sind allgemein bekannt und werden in der Regel anhand eines Dichtungsbalgs bzw. einer Dichtungsmanschette gegen Eindringen von Schmutz von Feuchtigkeit und gegen Austreten von Gelenkfett geschützt. Bei den heute üblichen Ausführungsformen wird der Dichtungsbalg beidseitig, d.h. am Gelenkgehäuse und am Kugelzapfen, dichtend befestigt, so dass das Gelenk abgedichtet und eine zuverlässige Gelenkfunktion gewährleistet ist.

Bei den herkömmlichen Befestigungsvarianten kann es durch Kapillarwirkung über die angrenzend befestigten Bauteile allerdings zu einem Rosten des Kugelzapfens und einer Funktionsstörung der Abdichtung kommen.

Eine mögliche Abhilfe für dieses Problem wird beispielsweise in der DE 10 2004 063 013 A1 vorgeschlagen. In dieser Druckschrift ist ein Stützring mit einer auf einem Wellenflanschprofil stoffschlüssig angebrachten Dichtung vorgesehen, der das Gelenkdichtsystem statisch zum Hebelauge abdichtet. Dabei stellt die stoffschlüssige Verbindung zwischen der Dichtung und dem Stützring allerdings eine aufwendige und kostenintensive Lösung dar.

In der JP 2 199 317 ist ein Kugelgelenk mit einem Stützring offenbart, bei dem eine Dichtung in ähnlicher Weise befestigt ist, wobei Dichtung und Stützring miteinander verklebt werden. In einer Ausführungsform wird das Dichtungselement um den Außenrand des Stützringflansches herumgezogen.

Die US 2003/0118395 A1 zeigt eine gattungsgemäße Dichtungsbaugruppe eines Kugelgelenks, wobei ein Dichtungsbalg an einem Kugelzapfen des Kugelgelenks befestigt ist. Zur Befestigung des Dichtungsbalgs sind ein Dichtungsring und ein Verankerungsring vorgesehen, wobei der Dichtungsring zum Kugelzapfen hin abdichtet und der Verankerungsring für den Andruck und eine Versteifung des Dichtungsbalgs im Bereich der Abdichtung sorgt. Der Verankerungsring ist ein Spritzgussteil und wird direkt an den Dichtungsring angespritzt. Nachfolgend wird der ebenfalls als Spritzgussteil ausgebildete Dichtungsbalg direkt an das Verbundbauteil aus Dichtungsring und Verankerungsring angespritzt.

Aufgabe der Erfindung ist eine möglichst zuverlässige, einfache und preiswerte Abdichtung eines Kugelgelenks.

Diese Aufgabe wird gelöst durch eine erfindungsgemäße Dichtungsbaugruppe eines Kugelgelenks, insbesondere für ein Fahrzeug, umfassend die Merkmale des Anspruchs 1.

In axialer Richtung fixiert bedeutet dabei genauer ausgedrückt, dass der Haltering und das Dichtelement in beiden axialen Richtungen aneinander spielfrei fixiert sind. Infolge der ausschließlich formschlüssigen Verbindung zwischen Dichtelement und Haltering kann auf teure Klebstoffe oder Haftvermittler verzichtet werden. Darüber hinaus vereinfacht sich durch die reine Formschlussverbindung auch das Herstellungsverfahren der Dichtungsbaugruppe, so dass sich insgesamt die Material- und Fertigungskosten reduzieren.

Im übrigen wird die Aufgabe auch gelöst durch eine Dichtungsbaugruppe eines Kugelgelenks, insbesondere für ein Fahrzeug, umfassend die Merkmale des Anspruchs 3. Auch in diesem Fall wird durch eine einfache Formschlussverbindung eine langlebige, zuverlässige und preiswerte Befestigung des Dichtelements am Haltering hergestellt.

Auch bei dieser Alternativlösung kann optional das Dichtelement ausschließlich über die Formschlussverbindung axial und radial spielfrei am Haltering befestigt sein.

Vorteilhafte und zweckmäßige Ausgestaltungen des Erfindungsgedankens sind in den Unteransprüchen beschrieben. Weitere Einzelheiten werden anhand der in den Figuren dargestellten Ausführungsbeispiele näher erläutert.
- Figur 1 eine Schnittzeichnung durch ein erfindungsgemäßes Kugelgelenk mit einer erfindungsgemäßen Dichtungsbaugruppe;
- Figur 2 einen Schnitt durch ein Dichtelement der erfindungsgemäßen Dichtungsbaugruppe gemäß einer ersten Ausführungsform;
- Figur 3 einen Detailschnitt durch die erfindungsgemäße Dichtungsbaugruppe gemäß der ersten Ausführungsform;
- Figur 4 einen Detailschnitt durch das erfindungsgemäße Kugelgelenk mit einer erfindungsgemäßen Dichtungsbaugruppe gemäß der ersten Ausführungsform;
- Figur 5 einen Schnitt durch einen Haltering der erfindungsgemäßen Dichtungsbaugruppe gemäß einer zweiten Ausführungsform;
- Figur 6 eine Draufsicht auf den Haltering gemäß Figur 5;
- Figur 7 einen Detailschnitt durch das erfindungsgemäße Kugelgelenk mit einer erfindungsgemäßen Dichtungsbaugruppe gemäß der zweiten Ausführungsform;
- Figur 8 einen Schnitt durch eine nicht erfindungsgemäße Dichtungsbaugruppe; gemäß einer dritten Ausführungsform;
- Figur 9 einen Schnitt durch eine nicht erfindungsgemäße Dichtungsbaugruppe gemäß einer vierten Ausführungsform;
- Figuren 10a und 10b Schnitte durch einen Haltering bzw. eine gesamte nicht erfindungsgemäße Dichtungsbaugruppe gemäß einer fünften Ausführungsform;
- Figur 11 einen Schnitt durch eine nicht erfindungsgemäße Dichtungsbaugruppe gemäß einer sechsten Ausführungsform;
- Figur 12 einen Schnitt durch eine nicht erfindungsgemäße Dichtungsbaugruppe gemäß einer siebten Ausführungsform;
- Figur 13 einen Schnitt durch einen Haltering für die Dichtungsbaugruppe gemäß Figur 12, vor einer Montage des Dichtelements;
- Figur 14 einen Schnitt durch ein Dichtelement für die Dichtungsbaugruppe gemäß Figur 12;
- Figur 15 einen Schnitt durch eine nicht erfindungsgemäße Dichtungsbaugruppe gemäß einer achten Ausführungsform;
- Figur 16 einen Schnitt durch einen Haltering für die Dichtungsbaugruppe gemäß Figur 15, vor einer Montage des Dichtelements;
- Figur 17 einen Schnitt durch ein Dichtelement für die Dichtungsbaugruppe gemäß Figur 15;
- Figur 18 einen Schnitt durch die erfindungsgemäße Dichtungsbaugruppe gemäß einer neunten Ausführungsform;
- Figur 19 eine Schnittzeichnung durch ein erfindungsgemäßes Kugelgelenk mit einer Dichtungsbaugruppe gemäß der neunten Ausführungsform;
- Figur 20 ein Schnittdetail des Kugelgelenks gemäß Figur 19; und
- Figur 21 das Schnittdetail gemäß Figur 20 in einer alternativen Ausführung.

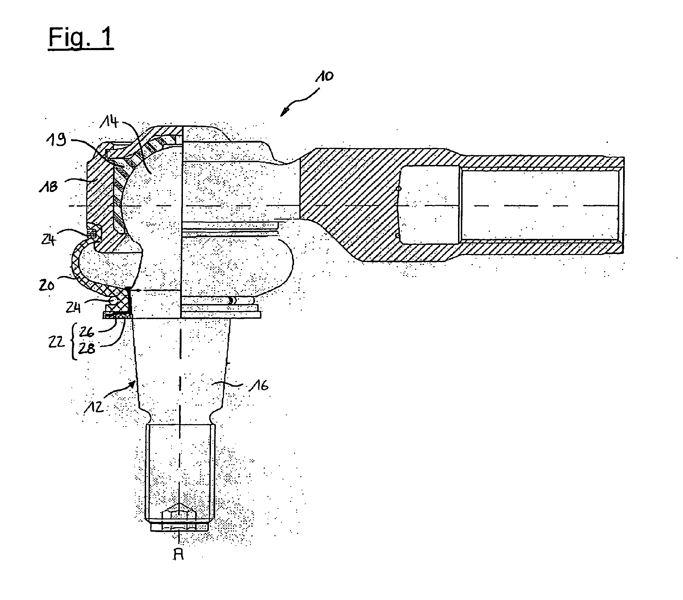

Die Figur 1 zeigt ein Kugelgelenk 10, insbesondere für ein Fahrzeug, mit einem Kugelzapfen 12, der einen Kugelkopf 14 und einen Schaftabschnitt 16 aufweist, einem Gelenkgehäuse 18 mit Lagerschale 19, welches den Kugelkopf 14 aufnehmen kann, einem Dichtungsbalg 20 zur Abdichtung eines Übergangsbereichs zwischen dem Kugelzapfen 12 und dem Gelenkgehäuse 18, sowie einer Dichtungsbaugruppe 22. Der Dichtungsbalg 20 ist dabei über Spannringe 24 einerseits am Gelenkgehäuse 18 und andererseits über die Dichtungsbaugruppe 22 am Schaftabschnitt 16 des Kugelzapfens 12 befestigt. Die Dichtungsbaugruppe 22 umfasst einen Haltering 26 und ein Dichtelement 28, die formschlüssig miteinander verbunden sind.

Der Haltering 26 hat vorzugsweise im Querschnitt ein L-Profil.

Der generelle Aufbau und die Funktionsweise des Kugelgelenks 10 sind bereits allgemein aus dem Stand der Technik bekannt und werden nicht näher beschrieben. Die Besonderheiten des Kugelgelenks 10 gemäß Figur 1 liegen in der Konstruktion der Dichtungsbaugruppe 22, auf die anhand der nachfolgenden Figuren genauer eingegangen wird:

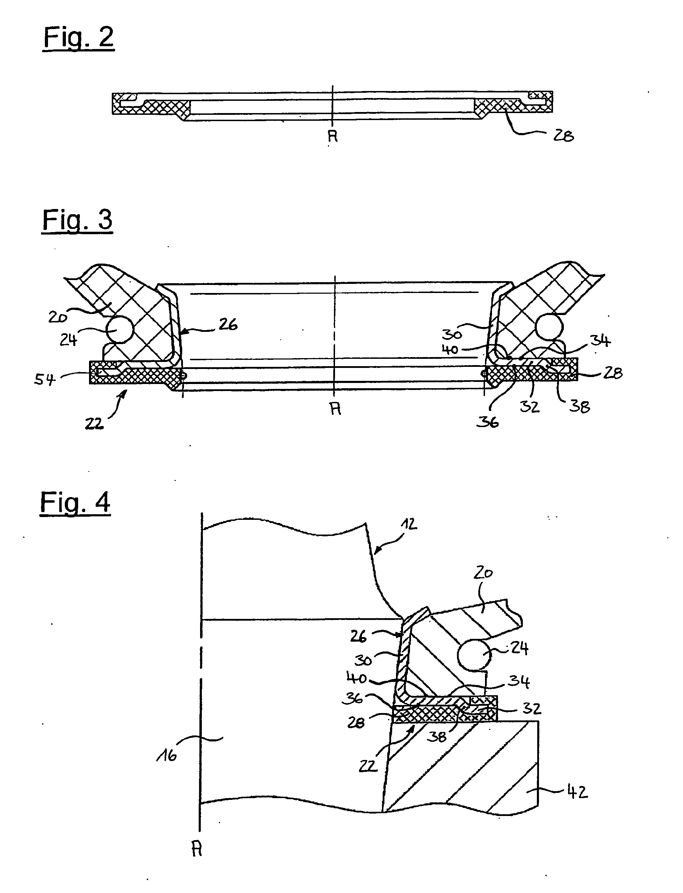

Die Figur 2 zeigt einen Detailschnitt durch das Dichtelement 28 für die Dichtungsbaugruppe 22 gemäß einer ersten Ausführungsform. Als Material für das Dichtelement wird vorzugsweise ein Elastomer, insbesondere ein thermoplastisches Polyurethan Elastomer (TPU) verwendet, es kann aber auch aus einem anderen Material bestehen, das ähnliche Eigenschaften aufweist. Das Dichtelement 28 wird in dieser ersten Ausführungsform vorzugsweise direkt an den Haltering 26 angespritzt und geht eine Formschlussverbindung mit diesem ein (vgl. Figur 3). Der Einsatz von besonderen Haftvermittlern in der Spritzmasse des Dichtelements 28 ist nicht notwendig, da das Dichtelement ausschließlich über die Formschlussverbindung zuverlässig am Haltering 26 befestigt ist.

Optional kann die Verwendung eines Trennmittels zwischen der Spritzmasse des Dichtelements und dem Haltering 26 vorgesehen sein, um eine Klebeverbindung zwischen dem Haltering und dem Dichtelement zu vermeiden.

Die Figur 3 zeigt einen Schnitt durch die Dichtungsbaugruppe 22 bei montiertem Dichtungsbalg 20.

Der Haltering 26 weist dabei einen hülsenförmigen Abschnitt 30 auf, der sich bezüglich einer Ringachse A im wesentlichen in axialer Richtung erstreckt, wobei sich der hülsenförmige Abschnitt auch konisch aufweiten bzw. verengen kann. An den hülsenförmigen Abschnitt 30 des Halterings 26 schließt sich einstückig ein radialer Ringflansch 32 an, der eine Flanschoberseite 34 und eine Flanschunterseite 36 aufweist.

In der ersten Ausführungsform gemäß den Figuren 2 bis 4 umgreift das Dichtelement 28 einen radial äußeren Umfangsrand 54 des Ringflansches 32 (vorzugsweise über den gesamten Umfangsrand 54), so dass sich sowohl in radialer als auch in axialer Richtung eine spielfreie Formschlussverbindung zwischen dem Haltering 26 und dem Dichtelement 28 einstellt. Der Ringflansch 32 weist dabei eine umlaufende axiale Stufe 38 auf, so dass das Dichtelement 28 trotz der Randumgreifung in axialer Richtung nicht über die Flanschoberseite 34 hinausragt. Dies erleichtert die unmittelbare Anlage des Dichtungsbalgs 20 an einer freiliegenden Kontaktfläche 40, die auf der Flanschoberseite 34 vorgesehen ist (vgl. Figur 3).

Das Dichtelement 28 lässt sich auch getrennt vom Haltering 26 herstellen, wobei es bei dieser Ausführungsform mit einer radialen Nut, ähnlich einer Tasche, versehen ist, in die der Umfangsrand 54 eingeschoben wird

Die Figur 4 zeigt einen weiteren Detailschnitt durch die Dichtungsbaugruppe 22 gemäß der ersten Ausführungsform, wobei die Dichtungsbaugruppe 22 bereits an einem Kugelgelenk 10 montiert ist. Der hülsenförmige Abschnitt 30 liegt am Schaftabschnitt 16 des Kugelzapfens 12 und das Dichtelement 28 an einem angrenzenden Bauteil 42 an. Des weiteren bilden sowohl der hülsenförmige Abschnitt 30 als auch der Ringflansch 32 jeweils eine Kontaktfläche 40 aus, an denen der Dichtungsbalg 20 im zusammengesetzten Zustand des Kugelgelenks 10 unmittelbar anliegt.

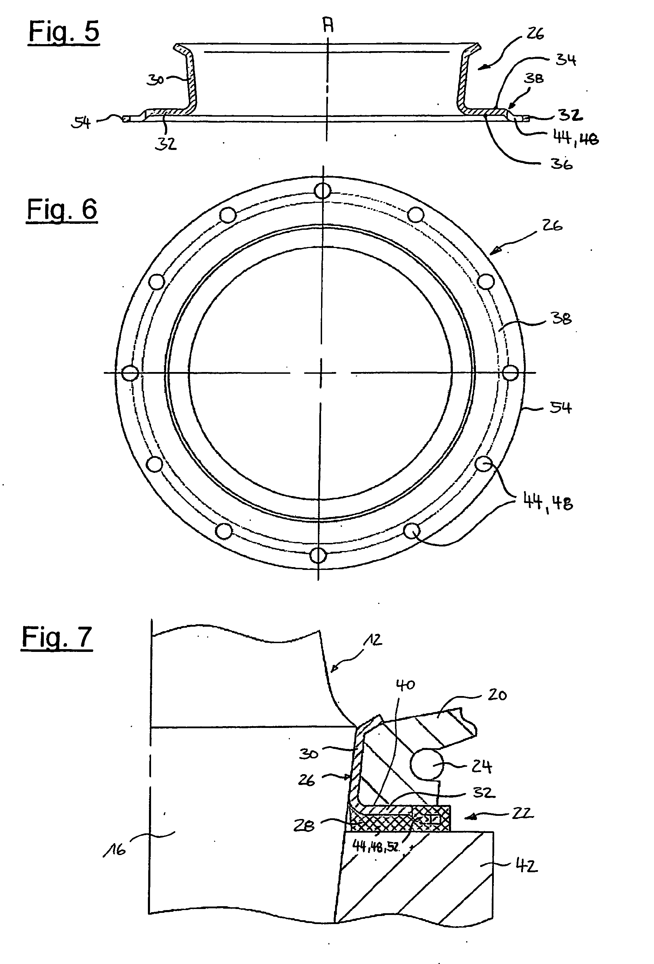

Die Figur 5 zeigt einen Schnitt durch den Haltering 26 der Dichtungsbaugruppe 22 gemäß einer zweiten Ausführungsform. Diese zweite Ausführungsform unterscheidet sich von der ersten Ausführungsform gemäß den Figuren 2 bis 4 lediglich dadurch, dass im Ringflansch 32 Ausnehmungen 48, hier Durchgangsöffnungen 44, vorgesehen sind.

In radialer Richtung befinden sich die Ausnehmungen 48 etwa im Bereich der axialen Stufe (Figur 5) und sind gleichmäßig über den Umfang des Ringflansches 32 verteilt (vgl. Draufsicht in Figur 6).

Auch in dieser Ausführungsvariante ist das Dichtelement 28 vorzugsweise direkt an den Haltering 26 angespritzt, so dass das Material des Dichtelements 28 die Ausnehmungen unter Bildung eines Fortsatzes 52 vollständig ausfüllt und zu einer Verstärkung der Formschlussverbindung zwischen dem Dichtelement 28 und dem Haltering 26 beiträgt (Figur 7). Insbesondere entsteht durch diese Ausnehmungen 48 eine Formschlussverbindung, welche den Haltering 26 und das Dichtelement 28 auch in Umfangsrichtung spielfrei aneinander fixiert.

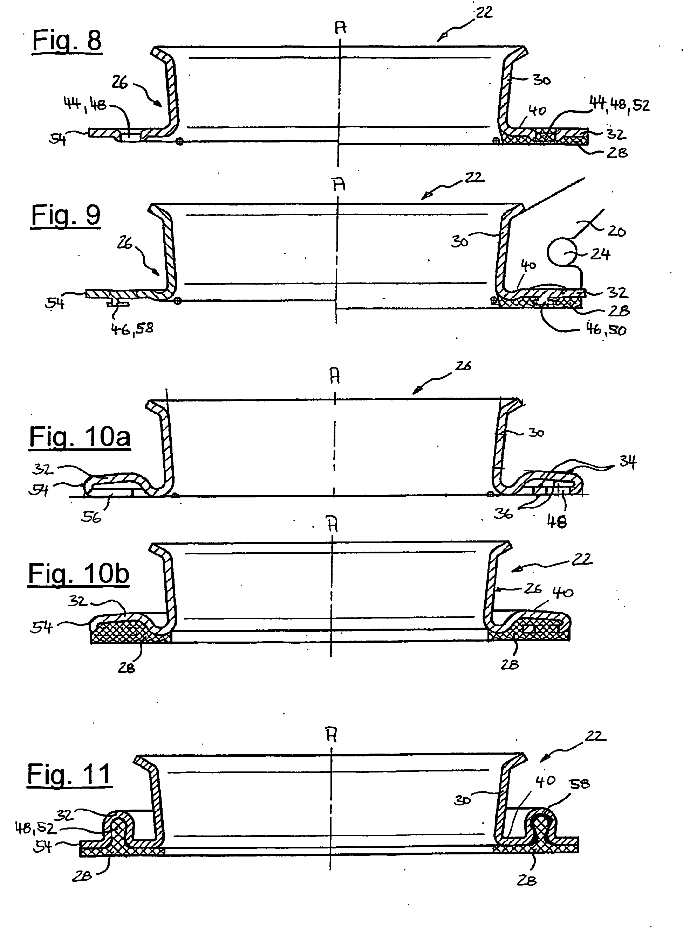

Die Figuren 8 und 9 zeigen jeweils einen Schnitt durch die Dichtungsbaugruppe 22 gemäß einer dritten bzw. vierten Ausführungsform, wobei auf der linken Seite jeweils der Haltering 26 ohne Dichtelement 28 und auf der rechten Seite der Haltering 26 mit Dichtelement 28 dargestellt ist. In der dritten Ausführungsform weist der Ringflansch 32 Ausnehmungen 48, vorzugsweise Durchgangsöffnungen 44, auf, welche angrenzend an die Flanschoberseite 34 eine Fase hat. Der erzeugte Konus bildet einen Teil der Flanschoberseite und gewährleistet den Formschluss in einer der axialen Richtungen und in radialer Richtung. Der Konus verhindert eine Bewegung des Dichtelements 28 relativ zum Ringflansch 32 nach unten (vgl. Figuren 8 und 9), ohne dass das Dichtelement 28 den Umfangsrand 54 des Ringflansches 32 umgreift.

In alternativen Ausführungsvarianten muss der Ringflansch keine Durchgangsöffnungen aufweisen.

Zur Bildung der Formschlussverbindung reicht es ganz allgemein aus, dass am Ringflansch 32 wenigstens ein Fortsatz 46 und/oder wenigstens eine Ausnehmung 48 vorgesehen ist, wobei der Fortsatz 46 des Ringflansches 32 in eine Ausnehmung 50 des Dichtelements 28 (z.B. Fig. 8) bzw. ein Fortsatz 52 des Dichtelements 28 in die Ausnehmung 48 des Ringflansches 32 (Fig. 9) eingreift.

Dieser wenigstens eine Fortsatz 46, 52 und die wenigstens eine Ausnehmung 48, 50 sind vorzugsweise komplementär ausgebildet, so dass der Haltering 26 und das Dichtelement 28 in axialer und radialer Richtung spielfrei aneinander fixiert sind.

Bei den Ausführungsformen nach den Figuren 1 bis 9 hat der Ringflansch 32 jeweils einen radial frei nach außen auslaufenden, im wesentlichen scheibenförmigen Umfangsrand 54. Im Unterschied dazu zeigen die Figuren 10a und 10b eine fünfte Ausführungsform der Dichtungsbaugruppe 22, bei der sich der Ringflansch 32 radial nach außen erstreckt und den äußeren Umfangsrand 54 definiert, wobei der Ringflansch 32 am äußeren Umfangsrand 54 nach innen umgeformt ist, so dass der Ringflansch 32 wenigstens abschnittsweise zweilagig ausgebildet ist. Bei derartig geformten Ringflanschen 32 werden alle Flächen, die im montierten Zustand des Kugelgelenks 10 dem Dichtungsbalg 20 zugewandt sind, als Flanschoberseite 34 und alle Flächen des Ringflansches 32, die dem Dichtungsbalg 20 abgewandt sind, als Flanschunterseite 36 bezeichnet. Das Dichtelement 28 erstreckt sich hier bis zwischen die beiden Lagen des Ringflansches 32.

Auch in dieser fünften Ausführungsform können im Ringflansch 32 optional Schlitze 56 (vgl. Figuren 10a und 10b, links) oder Ausnehmungen 48 (vgl. Figuren 10a und 10b, rechts) vorgesehen sein, um die Formschlussverbindung zwischen dem Dichtelement 28 und dem Haltering 26 zu verstärken.

Die Figur 11 zeigt die Dichtungsbaugruppe 22 gemäß einer sechsten Ausführungsform, bei der im Ringflansch 32 Ausnehmungen 48 und im Dichtelement 28 Fortsätze 52 ausgebildet sind, wobei die Fortsätze 52 die Ausnehmungen 48 vorzugsweise vollständig ausfüllen. Die Fortsätze 52 haben dabei ein freies, oberes Ende 58, wobei die Fortsätze 52 zu ihrem freien Ende 58 hin vorzugsweise eine Verbreiterung aufweisen (vgl. Figur 11, rechts). Somit wird durch diese zusammenwirkenden Fortsätze 52 und Ausnehmungen 48 erneut eine Formschlussverbindung gebildet, durch die der Haltering 26 und das Dichtelement 28 in radialer und axialer Richtung (d.h. genauer gesagt, in beiden axialen Richtungen) spielfrei aneinander fixiert sind.

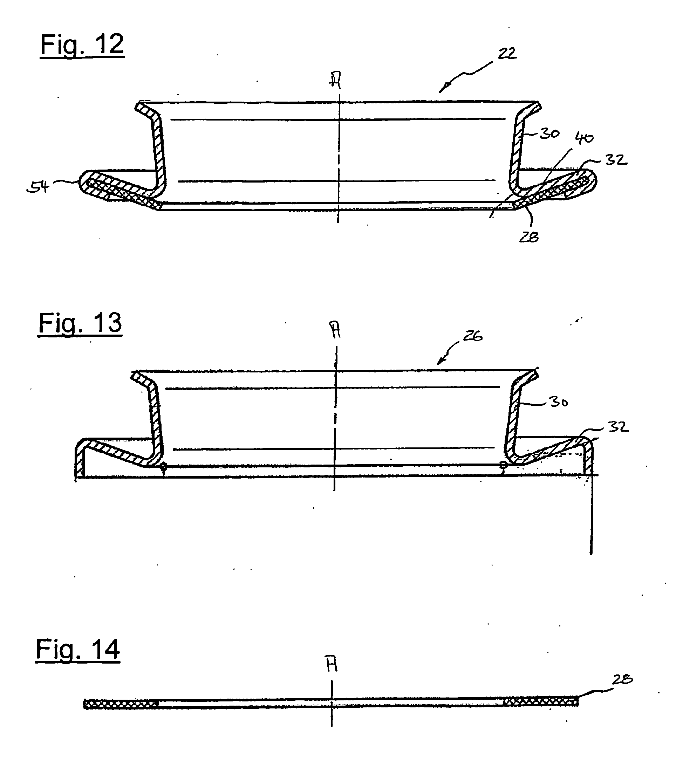

Die Figur 12 zeigt eine siebte Ausführungsform der Dichtungsbaugruppe 22, bei der die Formschlussverbindung zwischen dem Haltering 26 und dem Dichtelement 28 durch Umformen des Ringflansches 32 geschaffen wird. Die Figur 13 zeigt die Ausgangsform des Halterings 26 vor einer Umformung des Ringflansches 32. Das flächige, ringförmige Dichtelement 28 gemäß Figur 14 wird dem Haltering 26 gemäß Figur 13 von unten zugeführt, woraufhin der Ringflansch 32 umgeformt, insbesondere umgebördelt wird, so dass die Dichtungsbaugruppe 22 gemäß Figur 12 entsteht.

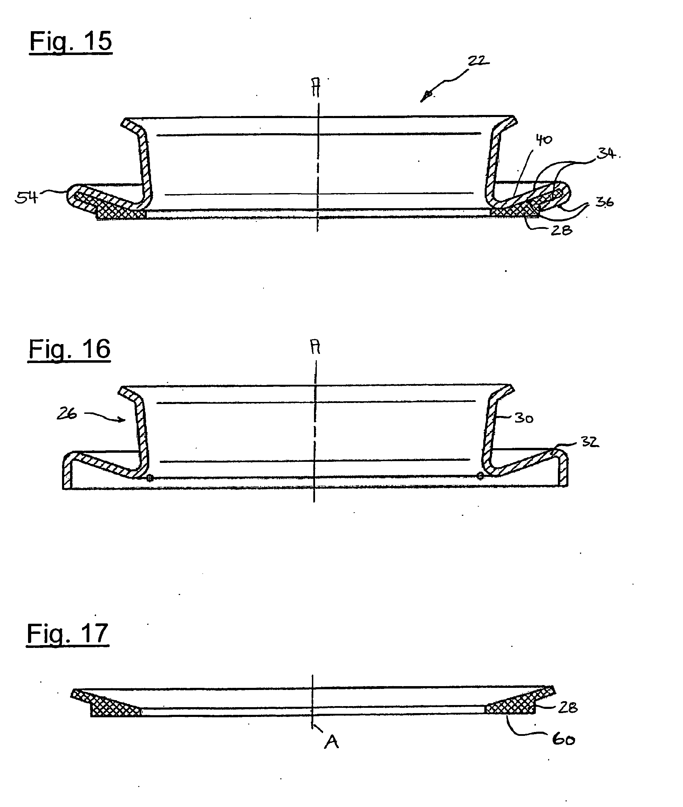

Die Figur 15 zeigt die Dichtungsbaugruppe 22 gemäß einer achten Ausführungsform, welche der siebten Ausführungsform gemäß den Figuren 12 bis 14 sehr ähnlich ist. Der einzige Unterschied ist, dass das Dichtelement 28 gemäß Figur 17 eine andere Querschnittsform aufweist und daher beim Zuführen an den Haltering 26 (Figur 16) bzw. beim Umbördeln des Ringflansches 32 nicht verformt werden muss. Außerdem weist das Dichtelement 22 in dieser Ausführungsform eine Anlagefläche 60 für das Bauteil 42 auf (vgl. Fig. 4), die sich in vorteilhafterweise senkrecht zur Ringachse A erstreckt.

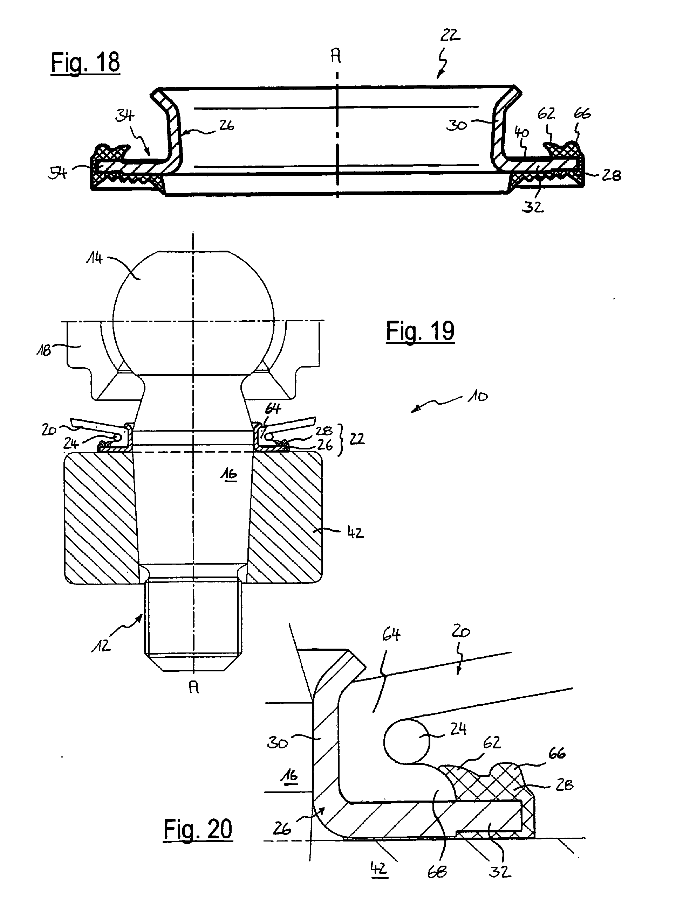

Die Figuren 18 bis 21 zeigen die Dichtungsbaugruppe 22 gemäß einer neunten Ausführungsform, welche der ersten Ausführungsform gemäß den Figuren 1 bis 4 sehr ähnlich ist. Analog zur ersten Ausführungsform ist auf der dem Dichtungsbalg 20 zugewandten Flanschoberseite 34 eine freiliegende Kontaktfläche 40 vorgesehen, so dass der Dichtungsbalg 20 im montierten Zustand unmittelbar am Ringflansch 32 des Halterings 26 anliegt (vgl. Fig. 20). Ferner liegt oder greift auch das Dichtelement 28 am Ringflansch 32, genauer an dessen Flanschoberseite 34 an. Allerdings ragt das Dichtelement 28 im Unterschied zur ersten Ausführungsform radial außerhalb der Kontaktfläche 40, d.h. im Bereich der Randumgreifung, in axialer Richtung über die Kontaktfläche 40 hinaus. Zum Schutz und zur Abdichtung der Kontaktstelle zwischen Haltering 26 und Dichtungsbalg 20 weist das Dichtelement 28 eine umlaufende Dichtlippe 62 auf, die mit einem Balgmund 64 des Dichtungsbalgs 20 in Kontakt ist. Der Balgmund 64 weist eine Balgdichtlippe 68 auf, wobei die Dichtlippe 62 an der Balgdichtlippe 68 anliegt und in ihrer Querschnittsform einer Kontur der Balgdichtlippe 68 angepasst ist, vorzugsweise indem die einander gegenüberliegenden Fläche gegengleich ausgeführt sind.

Die Dichtlippe 62 weist an einer radial nach innen weisenden Stirnseite eine konkave Kontur auf. Diese konkave Kontur der Dichtlippe 62 und die dazu vorzugsweise komplementäre Kontur der Balgdichtlippe 68 bilden eine selbstverstärkende Dichtung zwischen der Dichtlippe 62 und der Balgdichtlippe 68 aus, da eine äußere Einwirkung, z.B. ein in diesem Bereich auftreffender Wasserstrahl eines Hochdruckreinigers, die Dichtwirkung nicht beeinträchtigt, sondern verbessert.

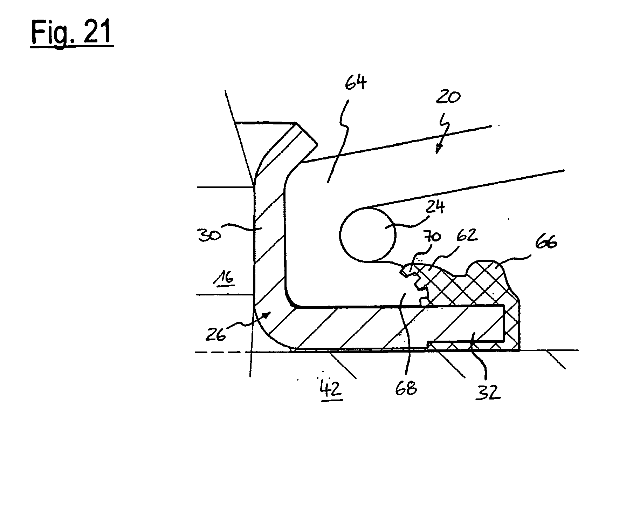

In einer Ausführungsvariante gemäß Figur 21 ist eine Kontaktfläche zwischen der Dichtlippe 62 und der Balgdichtlippe 68 als Labyrinthdichtung 70 ausgebildet. Diese Labyrinthdichtung 70 entsteht durch komplementäre Vorsprünge und Ausnehmungen in der Dichtlippe 62 und der Balgdichtlippe 68, wodurch sich eine Verzahnung ergibt, die zu einer weiteren Verbesserung der Dichtwirkung führt. Die Labyrinthdichtung 70 kann durch einen flächigen Kontakt der Dichtlippe 62 und der Balgdichtlippe 68 oder durch einen mäanderförmigen, geringen Spalt zwischen diesen gebildet sein.

Darüber hinaus weist das Dichtelement 28 der Dichtungsbaugruppe 22 einen umlaufenden Wulst 66 zum Schutz des Balgmunds 64 auf, wobei sich der Wulst 66 axial in Richtung zum Dichtungsbalg 20 erstreckt (vgl. Fig. 20). Insbesondere beim Einsatz von Hochdruckreinigern hat sich gezeigt, dass der Wulst 66 durch eine Ablenkung des Hochdruckstrahls einen direkten Kontakt des Spritzwassers mit einer Balgdichtlippe 68 des Balgmunds 64 verhindert und damit die Lebensdauer der Balgdichtlippe 68 erhöht.

Wie in den zuvor gezeigten Ausführungsformen wird bei der Montage der Dichtungsbaugruppe 22 der auf dem konusförmigen Schaftabschnitt 16 festsitzende Haltering 26 mit seinem Ringflansch 32 gegen eine Kontaktfläche des Bauteils 42 gedrückt, wobei der an der Flanschunterseite 36 formschlüssig angebrachte Abschnitt des elastischen Dichtelements 28 eine Abdichtung an der Kontaktstelle zum Bauteil 42 bewirkt und somit eine fortschreitende Korrosionsunterwanderung durch eindringende Feuchtigkeit am Schaftabschnitt 16 des Kugelzapfens 12 verhindert. Um eine besonders zuverlässige Abdichtung zum Bauteil 42 sicherzustellen, ist die Anlagefläche 60 des an der Flanschunterseite 36 angebrachten Dichtelementabschnitts vorzugsweise profiliert ausgebildet (vgl. Fig. 18).

Die Ausbildung des Dichtelements 28 mit der umlaufenden Dichtlippe 62 und/oder dem umlaufenden Wulst 66 ist zum Schutz der Kontaktstelle zwischen Haltering 26 und Dichtungsbalg 20 in allen Ausführungsformen der Dichtungsbaugruppe 22 denkbar, bei denen das Dichtelement 28 an die Flanschoberseite 34 angrenzt.

## Patentansprüche

1. Dichtungsbaugruppe eines Kugelgelenks (10), insbesondere für ein Fahrzeug, umfassend
einen Haltering (26), der eine Ringachse (A) und einen radialen Ringflansch (32) mit einer Flanschoberseite (34) und einer entgegengesetzten Flanschunterseite (36) aufweist, sowie
ein Dichtelement (28), das mit dem Haltering (26) formschlüssig verbunden ist, wobei die Formschlussverbindung so ausgebildet ist, dass der Haltering (26) und das Dichtelement (28) in axialer und radialer Richtung spielfrei aneinander fixiert sind, und
wobei die Flanschoberseite (34) eine freiliegende Kontaktfläche (40) für einen Dichtungsbalg (20) aufweist,
**dadurch gekennzeichnet, dass** das Dichtelement (28) sowohl an der Flanschoberseite (34) als auch an der Flanschunterseite (36) anliegt, mit dem Haltering (26) ausschließlich formschlüssig verbunden ist und einen radial äußeren Umfangsrand (54) des Ringflansches (32) umgreift,
wobei der Ringflansch (32) eine umlaufende axiale Stufe (38) aufweist.

2. Dichtungsbaugruppe nach Anspruch 1, **dadurch gekennzeichnet, dass** am Ringflansch (32) wenigstens ein Fortsatz (46) und/oder wenigstens eine Ausnehmung (48) vorgesehen ist, wobei der Fortsatz (46) des Ringflansches (32) in eine Ausnehmung (50) des Dichtelements (28) bzw. ein Fortsatz (52) des Dichtelements (28) in die Ausnehmung (48) des Ringflansches (32) zur Bildung der Formschlussverbindung eingreift.

3. Dichtungsbaugruppe eines Kugelgelenks (10), insbesondere für ein Fahrzeug, umfassend
einen Haltering (26), der eine Ringachse (A) und einen radialen Ringflansch (32) mit einer Flanschoberseite (34) und einer entgegengesetzten Flanschunterseite (36) aufweist, sowie
ein Dichtelement (28), das mit dem Haltering (26) formschlüssig verbunden ist, wobei am Ringflansch (32) wenigstens ein Fortsatz (46) und/oder wenigstens eine Ausnehmung (48) vorgesehen ist und der Fortsatz (46) des Ringflansches (32) in eine Ausnehmung (50) des Dichtelements (28) bzw. ein Fortsatz (52) des Dichtelements (28) in die Ausnehmung (48) des Ringflansches (32) zur Bildung der Formschlussverbindung eingreift;
**dadurch gekennzeichnet, dass** das Dichtelement (28) einen radial äußeren Umfangsrand (54) des Ringflansches (32) umgreift,
wobei der Ringflansch (32) eine umlaufende axiale Stufe (38) aufweist.

4. Dichtungsbaugruppe nach Anspruch 2 oder 3, **dadurch gekennzeichnet, dass** der wenigstens eine Fortsatz (46, 52) und die wenigstens eine Ausnehmung (48, 50) komplementär ausgebildet sind, so dass der Haltering (26) und das Dichtelement (28) in axialer und radialer Richtung spielfrei aneinander fixiert sind.

5. Dichtungsbaugruppe nach einem der vorhergehenden Ansprüche, **dadurch gekennzeichnet, dass** der Haltering (26) und das Dichtelement (28) durch die Formschlussverbindung in Umfangsrichtung spielfrei aneinander fixiert sind.

6. Dichtungsbaugruppe nach einem der vorhergehenden Ansprüche, **dadurch gekennzeichnet, dass** der Haltering (26) und das Dichtelement (28) nur durch Zerstörung voneinander trennbar sind.

7. Dichtungsbaugruppe nach einem der vorhergehenden Ansprüche, **dadurch gekennzeichnet, dass** das Dichtelement (28) direkt an den Haltering (26) angespritzt ist.

8. Kugelgelenk mit
einem Kugelzapfen (12), der einen Kugelkopf (14) und einen Schaftabschnitt (16) aufweist,
einem Gelenkgehäuse (18), welches den Kugelkopf (14) aufnehmen kann, einem Dichtungsbalg (20) zur Abdichtung eines Übergangsbereichs zwischen dem Kugelzapfen (12) und dem Gelenkgehäuse (18), **gekennzeichnet durch**
eine Dichtungsbaugruppe (22) nach einem der vorhergehenden Ansprüche.

9. Kugelgelenk nach Anspruch 8, **dadurch gekennzeichnet, dass** der Ringflansch (32) eine dem Dichtungsbalg (20) zugewandte Flanschoberseite (34) aufweist, wobei der Dichtungsbalg (20) im zusammengesetzten Zustand des Kugelgelenks (10) unmittelbar an einer Kontaktfläche (40) der Flanschoberseite (34) anliegt.

10. Kugelgelenk nach Anspruch 8 oder 9, **dadurch gekennzeichnet, dass** das Dichtelement (28) eine umlaufende Dichtlippe (62) aufweist, die mit einem Balgmund (64) des Dichtungsbalgs (20) in Kontakt ist.

11. Kugelgelenk nach Anspruch 10, **dadurch gekennzeichnet, dass** der Balgmund (64) eine Balgdichtlippe (68) aufweist, wobei die Dichtlippe (62) des Dichtelements (28) in ihrer Querschnittsform der Kontur der Balgdichtlippe (68) angepasst ist.

12. Kugelgelenk nach einem der Ansprüche 8 bis 11, **dadurch gekennzeichnet, dass** der Dichtungsbalg (20) einen Balgmund (64) mit einer Balgdichtlippe (68) aufweist und Dichtlippe (62) und Balgdichtlippe (68) eine Labyrinthdichtung (70) zwischen sich ausbilden ist.

13. Kugelgelenk nach einem der Ansprüche 8 bis 12, **dadurch gekennzeichnet, dass** das Dichtelement (28) der Dichtungsbaugruppe (22) einen umlaufenden Wulst (66) zum Schutz eines Balgmunds (64) des Dichtungsbalgs (20) aufweist, wobei sich der Wulst (66) axial in Richtung zum Dichtungsbalg (20) erstreckt.

## Claims

1. A sealing assembly of a ball joint (10), in particular for a vehicle, comprising
a retaining ring (26) which includes a ring axis (A) and a radial ring flange (32) having a flange upper side (34) and an opposed flange lower side (36), and
a sealing element (28) which is connected to the retaining ring (26) with an interlocking fit,
the interlocking fit being configured such that the retaining ring (26) and the sealing element (28) are fixed to each other free of play in the axial and in the radial direction, and
the flange upper side (34) having an exposed contact surface (40) for a sealing bellows (20),
**characterized in that** the sealing element (28) rests against both the flange upper side (34) and against the flange lower side (36), is connected to the retaining ring (26) exclusively with an interlocking fit, and engages around a radially outer peripheral edge (54) of the ring flange (32),
the ring flange (32) having a surrounding axial step (38).

2. The sealing assembly according to claim 1, **characterized in that** at least one projection (46) and/or at least one recess (48) is provided on the ring flange (32), the projection (46) of the ring flange (32) engaging in a recess (50) of the sealing element (28), or a projection (52) of the sealing element (28) engaging in the recess (48) of the ring flange (32), respectively, to realize the interlocking fit.

3. A sealing assembly of a ball joint (10), in particular for a vehicle, comprising
a retaining ring (26) which includes a ring axis (A) and a radial ring flange (32) having a flange upper side (34) and an opposed flange lower side (36), and
a sealing element (28) which is connected to the retaining ring (26) with an interlocking fit,
at least one projection (46) and/or at least one recess (48) being provided on the ring flange (32), and the projection (46) of the ring flange (32) engaging in a recess (50) of the sealing element (28), or a projection (52) of the sealing element (28) engaging in the recess (48) of the ring flange (32), respectively, to realize the interlocking fit,
**characterized in that** the sealing element (28) engages around a radially outer peripheral edge (54) of the ring flange (32),
the ring flange (32) having a surrounding axial step (38).

4. The sealing assembly according to claim 2 or 3, **characterized in that** the at least one projection (46, 52) and the at least one recess (48, 50) are configured so as to be complementary so that the retaining ring (26) and the sealing element (28) are fixed to each other free of play in the axial and in the radial direction.

5. The sealing assembly according to any of the preceding claims, **characterized in that** the retaining ring (26) and the sealing element (28) are fixed to each other free of play in the peripheral direction by means of the interlocking fit.

6. The sealing assembly according to any of the preceding claims, **characterized in that** the retaining ring (26) and the sealing element (28) can be detached from each other only by destruction.

7. The sealing assembly according to any of the preceding claims, **characterized in that** the sealing element (28) is directly injection-molded with the retaining ring (26).

8. A ball joint comprising
a ball stud (12) including a ball head (14) and a shank portion (16),
a joint housing (18) which can receive the ball head (14),
a sealing bellows (20) for sealing a transition region between the ball stud (12) and the joint housing (18), **characterized by**
a sealing assembly (22) according to any of the preceding claims.

9. The ball joint according to claim 8, **characterized in that** the ring flange (32) has a flange upper side (34) facing the sealing bellows (20), the sealing bellows (20) resting directly against a contact surface (40) of the flange upper side (34) in the assembled state of the ball joint (10).

10. The ball joint according to claim 8 or 9, **characterized in that** the sealing element (28) has a surrounding sealing lip (62) which contacts a bellows mouth (64) of the sealing bellows (20).

11. The ball joint according to claim 10, **characterized in that** the bellows mouth (64) has a bellows sealing lip (68), the cross-sectional shape of the sealing lip (62) of the sealing element (28) being adapted to the contour of the bellows sealing lip (68).

12. The ball joint according to any of claims 8 to 11, **characterized in that** the sealing bellows (20) includes a bellows mouth (64) having a bellows sealing lip (68), and **in that** the sealing lip (62) and the bellows sealing lip (68) form a labyrinth seal (70) therebetween.

13. The ball joint according to any of claims 8 to 12, **characterized in that** the sealing element (28) of the sealing assembly (22) has a surrounding bead (66) for protecting a bellows mouth (64) of the sealing bellows (20), the bead (66) extending axially towards the sealing bellows (20).

## Revendications

1. Ensemble structurel d'étanchéité d'un joint sphérique (10), en particulier pour un véhicule, comprenant
une bague de retenue (26) qui comporte un axe (A) et une bride annulaire radiale (32) pourvue d'une face supérieure (34) et d'une face inférieure (36) opposée, ainsi que
un élément d'étanchéité (28) qui est relié en coopération de formes à la bague de retenue (26),
la liaison par coopération de formes étant réalisée de telle sorte que la bague de retenue (26) et l'élément d'étanchéité (28) sont fixés sans jeu l'un sur l'autre en direction axiale et en direction radiale, et
la face supérieure (34) de la bride présentant une surface de contact (40) à découvert pour un soufflet d'étanchéité (20),
**caractérisé en ce que** l'élément d'étanchéité (28) prend appui aussi bien sur la face supérieure (34) de la bride que sur la face inférieure (36) de la bride, il est relié exclusivement en coopération de formes à la bague de retenue (26) et il entoure un bord périphérique (54) radialement extérieur de la bride annulaire (32),
la bride annulaire (32) présentant un étage axial périphérique (38).

2. Ensemble structurel d'étanchéité selon la revendication 1, **caractérisé en ce qu'**au moins un prolongement (46) et/ou au moins un évidement (48) est prévu sur la bride annulaire (32), le prolongement (46) de la bride annulaire (32) venant s'engager dans un évidement (50) de l'élément d'étanchéité (28) ou un prolongement (52) de l'élément d'étanchéité (28) venant s'engager dans l'évidement (48) de la bride annulaire (32) pour établir la liaison par coopération de formes.

3. Ensemble structurel d'étanchéité d'un joint sphérique (10), en particulier pour un véhicule, comprenant
une bague de retenue (26) qui comporte un axe (A) et une bride annulaire radiale (32) pourvue d'une face supérieure (34) et d'une face inférieure (36) opposée, ainsi que
un élément d'étanchéité (28) qui est relié en coopération de formes à la bague de retenue (26),
au moins un prolongement (46) et/ou au moins un évidement (48) étant prévu sur la bride annulaire (32), le prolongement (46) de la bride annulaire (32) venant s'engager dans un évidement (50) de l'élément d'étanchéité (28) ou un prolongement (52) de l'élément d'étanchéité (28) venant s'engager dans l'évidement (48) de la bride annulaire (32) pour établir la liaison par coopération de formes,
**caractérisé en ce que** l'élément d'étanchéité (28) entoure un bord périphérique (54) radialement extérieur de la bride annulaire (32),
la bride annulaire (32) présentant un étage axial périphérique (38).

4. Ensemble structurel d'étanchéité selon la revendication 2 ou 3, **caractérisé en ce que** ledit au moins un prolongement (46, 52) et ledit au moins un évidement (48, 50) sont réalisés de façon complémentaire, de sorte que la bague de retenue (26) et l'élément d'étanchéité (28) sont fixés sans jeu l'un sur l'autre en direction axiale et en direction radiale.

5. Ensemble structurel d'étanchéité selon l'une des revendications précédentes, **caractérisé en ce que** la bague de retenue (26) et l'élément d'étanchéité (28) sont fixés sans jeu l'un sur l'autre en direction périphérique par la liaison en coopération de formes.

6. Ensemble structurel d'étanchéité selon l'une des revendications précédentes, **caractérisé en ce que** la bague de retenue (26) et l'élément d'étanchéité (28) ne peuvent être séparés l'un de l'autre que par destruction.

7. Ensemble structurel d'étanchéité selon l'une des revendications précédentes, **caractérisé en ce que** l'élément d'étanchéité (28) est moulé par injection directement sur la bague de retenue (26).

8. Joint sphérique comportant
un tourillon sphérique (12) qui comprend une tête sphérique (14) et un tronçon formant tige (16),
un boîtier de joint (18) apte à recevoir la tête sphérique (14),
un soufflet d'étanchéité (20) destiné à étancher une zone transitoire entre le tourillon sphérique (12) et le boîtier de joint (18), **caractérisé par**
un ensemble structurel d'étanchéité (22) selon l'une des revendications précédentes.

9. Joint sphérique selon la revendication 8, **caractérisé en ce que** la bride annulaire (32) présente une face supérieure (34) tournée vers le soufflet d'étanchéité (20), le soufflet d'étanchéité (20) prenant appui directement contre une surface de contact (40) de la face supérieure (34) de la bride, dans l'état assemblé du joint sphérique (10).

10. Joint sphérique selon la revendication 8 ou 9, **caractérisé en ce que** l'élément d'étanchéité (28) comprend une lèvre d'étanchéité (62) périphérique qui est en contact avec une embouchure (64) du soufflet d'étanchéité (20).

11. Joint sphérique selon la revendication 10, **caractérisé en ce que** l'embouchure (64) du soufflet comprend une lèvre d'étanchéité, (68), la lèvre d'étanchéité (62) de l'élément d'étanchéité (28) étant adaptée de par sa forme en section transversale au contour de la lèvre d'étanchéité (68) du soufflet.

12. Joint sphérique selon l'une des revendications 8 à 11, **caractérisé en ce que** le soufflet d'étanchéité (20) comprend une embouchure (64) pourvue d'une lèvre d'étanchéité (68), et la lèvre d'étanchéité (62) et la lèvre d'étanchéité (68) du soufflet forment entre elles un joint à labyrinthe (70).

13. Joint sphérique selon l'une des revendications 8 à 12, **caractérisé en ce que** l'élément d'étanchéité (28) de l'ensemble structurel d'étanchéité (22) comprend un bourrelet périphérique (66) de protection d'une embouchure (64) du soufflet d'étanchéité (20), le bourrelet (66) s'étendant axialement en direction du soufflet d'étanchéité (20).
